# EUROPÄISCHE PATENTANMELDUNG

(11) **EP 2 647 497 A1**
(43) Veröffentlichungstag der Anmeldung: **09.10.2013**
(21) Anmeldenummer: 12162936.4
(22) Anmeldetag: 03.04.2012
(51) Int. Cl.: B32B 17/10

(54) **Verfahren zur Herstellung einer gewölbten Verbundscheibe mit vorgeformter Polymerfolie**

(71) Anmelder: Saint-Gobain Glass France, 92400 Courbevoie (FR)
(72) Erfinder: Klein, Marcel, 52499 Baesweiler (DE); Van Der Meulen, Uwe, 52385 Nideggen (DE); Rodriguez Gonzalez, Luz, 41464 Neuss (DE)
(74) Vertreter: Lendvai, Tomas

(57) **Zusammenfassung**

Verfahren zur Herstellung einer gewölbten Verbundglasscheibe, wobei
a) eine erste Laminierfolie (2.1) und/oder eine Polymerfolie (2.2) mittels eines Formwerkzeugs (7) tiefgezogen werden,
b) auf eine Grundscheibe (1) die erste Laminierfolie (2.1) und die Polymerfolie (2.2), auf die Polymerfolie (2.2) eine zweite Laminierfolie (3), auf die zweite Laminierfolie (3) eine Deckscheibe (4) angeordnet werden und
c) diese Anordnung aus b) autoklaviert wird.

## Beschreibung

Die vorliegende Erfindung betrifft ein Verfahren zur Herstellung einer Verbundglasscheibe.

Die steigenden Energie- und Rohstoffkosten bewirken eine Entwicklung hin zu möglichst kraftstoffsparenden Fahrzeugen. Einsparpotential liegt dabei unter anderem beim Energieverbrauch der Klimaanlage, der besonders nach langen Standzeiten bei direkter Sonneneinstrahlung hoch ist. Dies führt zu einem erhöhten Kraftstoffverbrauch sowie Schadstoffausstoß des Fahrzeugs. Des Weiteren beeinträchtigt die starke Erwärmung des Fahrzeuginnenraums den Komfort der Insassen.

Die Erwärmung des Fahrzeugs kann durch Verwendung infrarotundurchlässiger Folien oder Beschichtungen in Verbundglasscheiben vermindert werden. Zur Filterung des Infrarotanteils des Sonnenlichtes werden bevorzugt Polyesterfolien eingesetzt, die zusätzlich mit einer IR-Strahlung reflektierenden Beschichtung ausgestattet sind. Zu diesem Zweck werden Metallbeschichtungen verwendet, bevorzugt Silber. Alternativ können auch Beschichtungen aufgebracht werden, die andere Teile des elektromagnetischen Spektrums reflektieren, wie beispielsweise UV-Strahlung.

Neben den technischen Anforderungen an eine Scheibe steigen auch die ästhetischen Ansprüche an Fahrzeuge zunehmend. Dadurch entsteht ein wachsender Bedarf an optisch ansprechenden Verbundglasscheiben. Diese weisen häufig komplexe Geometrien auf. Dazu gehören sowohl übliche Scheibenformate mit außergewöhnlich starken Biegungen als auch Panoramaglasscheiben. Besonders Panoramascheiben führen allerdings aufgrund der großen Einstrahlfläche zu einer starken Erwärmung des Fahrzeuginnenraums. Der Einsatz von infrarotundurchlässigen Folien oder Beschichtungen im Folienverbund des Verbundglases ist hier besonders ratsam. Bevorzugt wird dazu ein Trilayer aus zwei PVB-Folien, zwischen denen eine beschichtete PET-Folie eingelegt ist, verwendet. Komplex gebogene Scheibengeometrien mit diesen beiden verschiedenartigen Materialien im Folienverbund sind jedoch nur schwer realisierbar. Aufgrund der unterschiedlichen Materialeigenschaften der Folienbestandteile neigen die Folien besonders bei stark gekrümmten Scheiben zu Faltenbildung. Schon geringfügige Materialschwankungen der PVB- und PET-Folien führen zu vermehrter Faltenbildung. Diese Falten treten vor allem an den Ecken und Kanten der Scheibe auf, da viele Scheibengeometrien in diesen Bereichen eine stärkere Krümmung zeigen. Um diese Faltenbildung zu verhindern wird nach dem Stand der Technik die PET-Folie an den Rändern der Scheibe zurückgeschnitten, so dass im Randbereich der Scheibe die beiden PVB-Folien direkt aufeinander liegen. Dieser Übergang zwischen Trilayer und Randbereich ohne PET-Folie grenzt an den im späteren Produktionsverlauf aufgebrachten schwarzen Siebdruck und ist nach Einbau der Scheibe im Fahrzeug als optisch störende Kante sichtbar. Bei starken Wölbungen im Randbereich der Scheibe muss die PET-Folie sehr weit zurückgeschnitten werden um Faltenbildung zu verhindern. Infolge dessen treten im weiteren Produktionsverlauf sogenannte Einlegefehler auf. Dabei liegt der Übergang zwischen Randbereich und Trilayer zu weit im sichtbaren Bereich der Scheibe und stört die Sicht. Ein Verfahren zur Laminierung großer Stückzahlen stark gewölbter Scheiben, bei dem weder Falten auftreten noch der Übergang zwischen beiden Folienbereichen sichtbar ist, ist nach dem Stand der Technik nicht bekannt.

Produktionsfehler wie Faltenbildung oder Einlegefehler resultieren in hohen Ausschusszahlen, da derartig fehlerhafte Scheiben nicht verwendet werden können. Bedingt dadurch steigen die Produktionskosten des Endprodukts. Scheibengeometrien mit hoher Komplexität sind bisher nicht in großen Stückzahlen mit einer PET-Folie im Folienverbund laminierbar. Des Weiteren ist es erstrebenswert den Anteil der im Randbereich abgeschnittenen PET-Folie möglichst gering zu halten, da so der als optisch störende Kante sichtbare Übergang zwischen Trilayer und Randbereich nicht mehr in den sichtbaren Bereich der Scheibe fällt.

EP 0 371 949 A1 offenbart eine Verbundglasscheibe mit Sonnenschutzbeschichtung. Die Verbundglasscheibe enthält zwei PVB-Folien und eine dazwischen liegende PET-Folie. Die PET-Folie ist mit einem Metall und einer dielektrischen Beschichtung ausgestattet. Diese Sonnenschutzbeschichtung verringert neben ihrer eigentlichen Funktion auch die Totalreflektion der Scheibe. Dadurch sind etwaige Falten der PET-Folie optisch weniger auffällig.

EP 0 304 898 B 1 offenbart ein Verfahren zur Herstellung einer Scheibe laminiert mit einem Polymerfilm. Während des Evakuiervorgangs wird ein aufgerauhter Abdeckfilm eingesetzt, der nicht an der Kunststoffoberfläche haftet. So werden Falten und Verziehungen der Polymerfolie vermieden.

US 6,261,398 B1 offenbart ein Verfahren zur Herstellung von gebogenem laminiertem Sicherheitsglas mit zwei Deckfolien, in die ein thermoplastisches Substrat eingebettet ist. Die Deckfolien bestehen bevorzugt aus PVB, während als thermoplastisches Substrat bevorzugt beschichtete PET-Folien verwendet werden. Bei der Beschichtung handelt es sich beispielsweise um eine Silberschicht als Sonnenschutzbeschichtung. In einem ersten Verfahrensschritt werden die beiden Scheiben des Verbundglases gemeinsam gebogen, wie nach dem Stand der Technik bereits bekannt. Daraufhin werden eine erste PVB-Folie und die beschichtete PET-Folie in dieser Reihenfolge auf die untere vorgebogene Grundscheibe aufgelegt. Der Folienstapel wird mit der oberen vorgebogenen Deckscheibe abgedeckt und unter vermindertem Druck erhitzt. Nach Entfernen der oberen Glasplatte entspricht die Form der PET-Folie der unteren Grundscheibe. Im Folgenden wird die zweite PVB-Folie auf den Folienstapel aufgelegt und die Verbundglasscheibe nach üblichen Verfahren fertig gestellt. Dabei wird die Anordnung aus Grund- und Deckscheibe zunächst vorevakuiert und anschließend im Autoklaven endgültig verbunden.

EP 2 261 030 A1 offenbart ein Verfahren zur Herstellung einer Verbundglasscheibe mit einem Folienverbund aus zwei PVB-Folien und einer PET-Zwischenschicht. Eine erste PVB-Folie, die PET-Folie und eine Trennfolie werden auf die untere Grundscheibe aufgelegt. Der Folienstapel wird mit einer Deckscheibe abgeschlossen und im Autoklaven evakuiert. Die verwendete Trennfolie enthält PVF oder PVDF und dient der faltenfreien Laminierung der Verbundglasscheibe. Nachfolgend werden Deckscheibe und Trennfolie entfernt, eine zweite PVB-Folie aufgelegt und die Verbundglasscheibe fertig gestellt. Dieses Verfahren ist sehr aufwändig, da die Scheibe wie beschrieben vorbehandelt werden muss und ein abgeänderter Autoklavenprozess notwendig ist. Des Weiteren ist keine direkte Verarbeitung der Polymerfolien von der Rolle möglich und der gesamte Prozess ist dadurch vergleichsweise langwierig. Somit ist dieses Verfahren nur für eine Produktion im kleinen Maßstab geeignet. Nach dem bisherigen Stand der Technik ist eine wirtschaftliche Produktion vollständig faltenfrei laminierter und komplex gebogener Verbundglasscheiben nicht im großen Maßstab möglich, ohne im Randbereich der Scheibe große Anteile der Polymerfolie abzuschneiden. Ein Verfahren zur kontinuierlichen Vorbehandlung der Polymerfolien zur Herstellung faltenfrei laminierter Verbundglasscheiben ist bisher nicht bekannt. Nach dem Stand der Technik müssen die Ränder der Polymerfolie bisher stärker beschnitten werden als die Ränder der Laminierfolie, da es sonst im oft stark gekrümmten Randbereich der Scheibe zu Faltenbildung kommt. Der Übergang zwischen dem Randbereich der Scheibe ohne Polymerfolie und der restlichen Scheibenfläche ist dann als optisch störende Kante sichtbar. Außerdem steigt mit dem Anteil der im Randbereich der Scheibe abgeschnittenen Polymerfolie auch die Gefahr von Einlegefehlern.

Die Aufgabe der Erfindung liegt darin, ein wirtschaftlich lohneswertes Verfahren zur Herstellung einer komplex gewölbten Verbundglasscheibe mit einem Folienverbund aus zwei Laminierfolien und einer Zwischenschicht aus einer Polymerfolie bereitzustellen, bei dem eine faltenfreie Laminierung des Folienverbunds mit den Scheiben möglich ist und der Anteil der im Randbereich abgeschnittenen Polymerfolie auch bei beschichteten Folien gering gehalten werden kann.

Die Aufgabe der vorliegenden Erfindung wird erfindungsgemäß durch ein Verfahren zur Herstellung einer gewölbten Verbundglasscheibe mit vorgeformter Polymerfolie, eine durch das Verfahren hergestellte Verbundglasscheibe, deren Verwendung und die Verwendung der vorgeformten Polymerfolie nach den unabhängigen Ansprüchen 1 und 13 bis 15 gelöst. Bevorzugte Ausführungen der Erfindung gehen aus den Unteransprüchen hervor.

Das Verfahren zur Herstellung einer gewölbten Verbundglasscheibe mit vorgeformter Polymerfolie umfasst das Tiefziehen einer ersten Laminierfolie und einer Polymerfolie sowie die Herstellung einer Verbundglasscheibe unter Verwendung dieser vorgeformten Folien. Die erste Laminierfolie und die Polymerfolie werden zunächst im Tiefziehverfahren mittels eines Formwerkzeugs vorgeformt. Die erste Laminierfolie und die Polymerfolie werden in einer bevorzugten Ausführungsform als Bilayer verwendet. Auf eine Grundscheibe wird der Bilayer, darauf eine zweite Laminierfolie und auf die zweite Laminierfolie eine Deckscheibe aufgelegt. Diese Anordnung wird, wie nach dem Stand der Technik bekannt, autoklaviert und eine Verbundglasscheibe hergestellt. Bevorzugt erfolgt vor der Behandlung im Autoklaven die Vorevakuierung der Anordnung in einem Gummisack.

In einem ersten Schritt erfolgt das Vorformen der ersten Laminierfolie und der Polymerfolie im Tiefziehverfahren. Die erste Laminierfolie und die Polymerfolie werden mit der ersten Laminierfolie nach unten zeigend in die Tiefziehmaschine eingelegt. Ein umlaufender Rahmen wird von oben auf die beiden Folien aufgesetzt. Dadurch sind die erste Laminierfolie und die Polymerfolie fixiert und für den Tiefziehvorgang vorgespannt. Alternativ zum umlaufenden Rahmen ist auch eine Fixierung über Klammern oder Haftband möglich. Da die Polymerfolie und die erste Laminierfolie als Bilayer eingesetzt werden, liegen die beiden Folien direkt faltenfrei aufeinander und können in einem Arbeitsschritt gemeinsam bearbeitet werden. So weisen sie nach dem Tiefziehen exakt die gleiche Form auf. Alternativ ist auch eine einzelne Behandlung der Folien möglich. Bevorzugt liegt der vorgefertigte Bilayer auf einer Rolle vor. Das Tiefziehverfahren erfolgt dann als halbkontinuierlicher Prozess, bei dem ein Stück des Bilayers abgerollt wird, die Rolle angehalten wird, ein Folienabschnitt geformt wird und durch Weitertransport der Folie der nächste Folienabschnitt eingelegt wird. Im Tiefziehverfahren senkt sich der umlaufende Rahmen zunächst von oben auf den Bilayer ab und spannt diesen vor. Danach wird der Bilayer durch jeweils eine Heizung ober- und unterhalb der Folie erwärmt. Die beiden Heizungen sind beweglich und werden nach ihrem Einsatz seitlich entfernt. Daraufhin wird ein Formwerkzeug von unten in den Bilayer aus erster Laminierfolie und Polymerfolie gedrückt. Am Rand des Formwerkzeugs befinden sich Vakuumdüsen. Über diese Vakuumdüsen wird ein Vakuum angelegt und die Anordnung evakuiert. Dabei wird die Luft zwischen Formwerkzeug und Bilayer entfernt und der Bilayer wird auf das Formwerkzeug gepresst. Der Bilayer ist im erwärmten Zustand leicht dehnbar und passt sich in seiner Form dem verwendeten Formwerkzeug an. Das Vakuum wird entfernt und der Bilayer durch Aufblasen kalter Luft abgekühlt. Diese Kühlung der Folienanordnung erfolgt bevorzugt über Ventilatoren. Im verwendeten Tiefziehverfahren werden vier Ventilatoren eingesetzt. Die Ventilatoren befinden sich oberhalb der Folienanordnung, so dass eine gute Konvektion des Luftstroms über die Folienoberfläche gegeben ist. Das Formwerkzeug und der umlaufende Rahmen werden nach Abkühlung der Folien entfernt. Der erkaltete Bilayer behält die Form des Formwerkzeugs. Der verformte Folienabschnitt wird ausgeschnitten und die überstehenden unverformten Folienränder werden entfernt. Bei Verwendung von unbeschichteten Polymerfolien können die erste Laminierfolie und die Polymerfolie in genau der gleichen Form und Größe ausgeschnitten werden. Somit ist bei Verwendung unbeschichteter Polymerfolien keine optisch störende Kante im Sichtfeld der Scheibe vorhanden und es können außerdem sämtliche Einlegefehler vermieden werden.

Das im Tiefziehverfahren verwendete Formwerkzeug entspricht in seiner Grundform der Form der Deckscheibe und der Grundscheibe. Der Bilayer aus erster Laminierfolie und einer Polymerfolie verfügt über eine hohe Steifigkeit, während die Grundform des Formwerkzeugs scharfe Kanten aufweist. Durch seine hohe Steifigkeit kann der Bilayer diese scharfen Kanten nicht exakt umschließen. Dies führt zu einem Aufstauen der Folien an den Ecken des Formwerkzeugs und zu einer Faltenbildung des Bilayers. Des Weiteren verkratzen die scharfen Kanten des Formwerkzeugs die Folienoberflächen. Aus diesem Grund werden die Kanten des Formwerkzeugs mit einem Radius von 0,5 cm bis 3 cm, bevorzugt etwa 2 cm abgerundet. Dadurch wird das Formwerkzeug im Vergleich zu seiner Grundform etwas vergrößert. Der größere Radius der Kanten ermöglicht überraschenderweise ein vollständig faltenfreies Tiefziehen des Bilayers. Eine solche vollständige Vermeidung von Falten auch bei stark gekrümmter Scheibengeometrie war bisher nach dem Stand der Technik in der Serienfertigung nicht möglich.

Die Polymerfolie verfügt in einer bevorzugten Ausführungsform über eine infrarotreflektierende Beschichtung. Diese enthält Silber, Titandioxid, Aluminiumnitrid oder Zinkoxid, wobei bevorzugt Silber eingesetzt wird. Ein Kontakt der Silberbeschichtung mit Feuchtigkeit führt zu Korrosion des Metalls. Diese Korrosion kann vermieden werden indem die Größe der beschichteten Polymerfolie etwas kleiner gewählt wird als die Größe der beiden Laminierfolien. Dazu wird der Rand der Polymerfolie abgeschnitten. Im Randbereich liegen die beiden Laminierfolien nun direkt aufeinander. Die Laminierfolien umschließen die Polymerfolie auf diese Weise komplett und verhindern so die Korrosion der Silberbeschichtung durch Umwelteinflüsse, wie beispielsweise Feuchtigkeit. Nach dem bisherigen Stand der Technik muss ein großer Anteil der Polymerfolie im Randbereich entfernt werden um eine Faltenbildung zu vermeiden. Nach dem erfindungsgemäßen Verfahren ist hingegen nur ein minimaler Anteil der Polymerfolie im Randbereich der Scheibe zu entfernen. Dadurch bedingt, wird der Übergang zwischen dem Randbereich ohne Polymerfolie und der restlichen Scheibe durch den Schwarzdruck am Scheibenrand verdeckt. Somit liegt dieser Übergang nicht im Sichtbereich der Scheibe und es tritt keine optisch störende Kante auf. Des Weiteren kann der Anteil der auftretenden Einlegefehler auf diese Weise stark dezimiert werden. Somit ist das erfindungsgemäße Verfahren wesentlich wirtschaftlicher als die nach dem Stand der Technik verwendeten Verfahren.

Die Heizungen zur Erwärmung des Bilayers werden generell bei einer Temperatur von 70 °C bis 150 °C, bevorzugt 90 °C bis 130 °C betrieben. Je nach Wahl der Folie muss die Temperatur eingestellt werden. Bei beschichteten Folien ist je nach Art der Beschichtung eine andere Temperatureinstellung notwendig. Da infrarotreflektierende Beschichtungen die Wärmestrahlung der Heizungen reflektieren, müssen in dieser Ausführungsform wesentlich höhere Temperaturen zur Erwärmung der Polymerfolie eingestellt werden. Der Bilayer wird so in die Tiefziehvorrichtung eingespannt, dass die beschichtete Polymerfolie nach oben zeigt. Die obere Heizung wird in diesem Fall bei einer Temperatur von 500 °C bis 700 °C, bevorzugt 550 bis 650 °C betrieben. Die untere Heizung wird weiterhin bei einer Temperatur von 70 °C bis 150 °C, bevorzugt 90 °C bis 130 °C gehalten. Der Bilayer wird 10 Sekunden bis 150 Sekunden, bevorzugt 12 Sekunden bis 120 Sekunden erwärmt.

Zur Evakuierung der Luft zwischen Formwerkzeug und Bilayer wird ein Vakuum von 200 mbar bis 1000 mbar, bevorzugt 600 mbar bis 800 mbar angelegt. Die Evakuierung erfolgt 20 Sekunden bis 80 Sekunden, bevorzugt 35 Sekunden bis 60 Sekunden.

Die erste Laminierfolie und die zweite Laminierfolie umfassen Polyvinylbutyral, Ethylenvinylacetat, Polyurethan und/oder Gemische und/oder Copolymere davon. Bevorzugt wird Polyvinylbutyral verwendet.

Die erste Laminierfolie und die zweite Laminierfolie weisen eine Dicke auf von 0,1 mm bis 0,8 mm, bevorzugt von 0,3 mm bis 0,6 mm.

Die Polymerfolie enthält Polyethylenterephthalat, Polyethylen, Polypropylen, Polycarbonat, Polybutylenterephthalat, Polyethylennaphthalat und/oder Gemische und/oder Copolymere davon. Bevorzugt wird Polyethylenterephthalat eingesetzt.

Die Polymerfolie weist eine Dicke auf von 20 µm bis 100 µm, bevorzugt 40 µm bis 60 µm.

Die Grundscheibe und die Deckscheibe enthalten Kalk-Natron-Glas, Quarzglas, Borsilikatglas oder Polymethylmethacrylat.

Die Grundscheibe und die Deckscheibe weisen eine Dicke auf von 0,5 mm bis 20 mm, bevorzugt 1 mm bis 6 mm.

Das Autoklavieren der Verbundglasscheibe erfolgt bei 100 °C bis 150 °C, bevorzugt 115 °C bis 145 °C und bei einem Druck von 10 bar bis 15 bar. Die Behandlung im Autoklaven erfolgt für einen Zeitraum von 1 Stunde bis 4 Stunden, bevorzugt 2 Stunden bis 3 Stunden.

Besondere Ausführungen der erfindungsgemäßen Verbundglasscheibe können auch mehrere tiefgezogene Folien enthalten, wobei auch andere Folienbeschichtungen, beispielsweise zur Reflektion von UV-Strahlung verwendet werden können.

Die Erfindung umfasst des Weiteren die Verwendung einer nach dem erfindungsgemäßen Verfahren hergestellten Verbundglasscheibe als Fahrzeugscheibe, Schiffsscheibe, als Bauverglasung oder Architekturverglasung.

Die Erfindung umfasst des Weiteren die Verwendung einer tiefgezogenen Polymerfolie und/oder Laminierfolie in einer Verbundglasscheibe.

Die Erfindung umfasst des Weiteren eine Verbundglasscheibe erhältlich nach dem erfindungsgemäßen Verfahren mindestens umfassend eine Grundscheibe, eine erste Laminierfolie, eine tiefgezogene Polymerfolie, eine zweite Laminierfolie und eine Deckscheibe.

Im Folgenden wird die Erfindung anhand einer Zeichnung näher erläutert. Die Zeichnung schränkt die Erfindung in keiner Weise ein.

Es zeigen:
Figur 1 eine schematische Ansicht der Scheibenzusammensetzung nach dem erfindungsgemäßen Verfahren.
Figur 2 einen Querschnitt der nach dem erfindungsgemäßen Verfahren hergestellten erfindungsgemäßen Verbundglasscheibe.
Figur 3 eine schematische Ansicht der Erwärmung des Bilayers im Tiefziehverfahren.
Figur 4 eine schematische Draufsicht auf den Bilayer während der Evakuierung der Anordnung im Tiefziehverfahren.
Figur 5 einen Querschnitt A-A' der Anordnung in Figur 4.
Figur 6 eine Verbundglasscheibe mit gemäß dem Stand der Technik im Randbereich stark beschnittener Polymerfolie.
Figur 7 ein Fließschema des Tiefziehverfahrens zur Vorformung des Bilayers.
Figur 8 ein Fließschema des erfindungsgemäßen Verfahrens zur Herstellung der erfindungsgemäßen Verbundglasscheibe mit vorgeformter Polymerfolie.

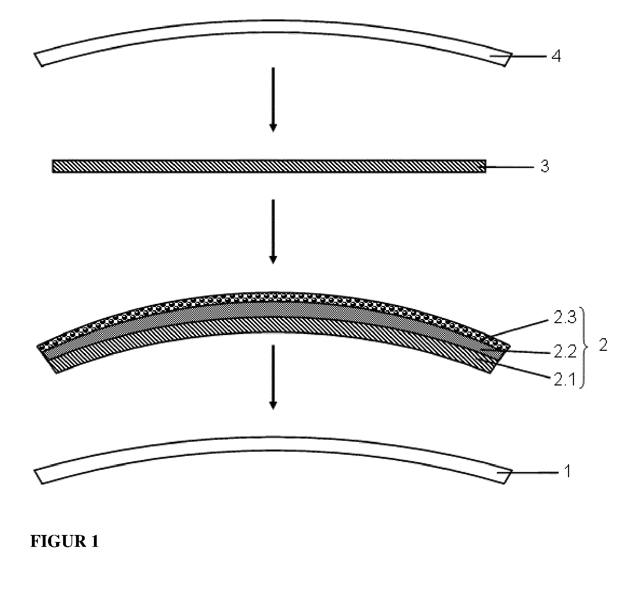

Figur 1 zeigt die Zusammensetzung der nach dem erfindungsgemäßen Verfahren hergestellten erfindungsgemäßen Verbundglasscheibe. Die untere Grundscheibe (1) wird zusammen mit der oberen Deckscheibe (4) gebogen. Auf die Grundscheibe (1) wird der im Tiefziehverfahren vorgeformte Bilayer (2) aufgelegt. Der Bilayer (2) umfasst eine untere Laminierfolie (2.1) und eine Polymerfolie (2.2). In der bevorzugten Ausführungsform verfügt die Polymerfolie (2.2) über eine infrarotreflektierende Beschichtung (2.3). Auf den Bilayer (2) wird eine planare zweite Laminierfolie (3) aufgelegt. Der Folienstapel wird durch die Deckscheibe (4) abgeschlossen, die auf die zweite Laminierfolie (3) aufgelegt wird.

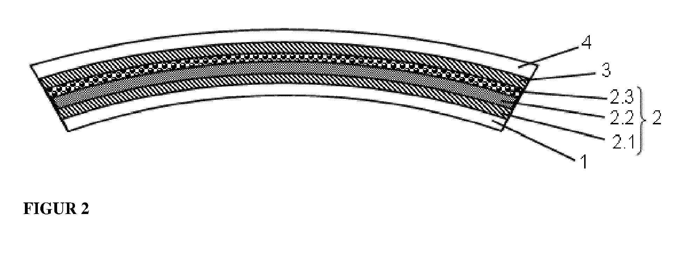

Figur 2 zeigt die nach dem erfindungsgemäßen Verfahren hergestellte erfindungsgemäße Verbundglasscheibe. Die Verbundglasscheibe umfasst mindestens eine Grundscheibe (1), einen Bilayer (2), eine zweite Laminierfolie (3) und eine Deckscheibe (4). Der Bilayer (2) enthält mindestens eine erste Laminierfolie (2.1) und eine Polymerfolie (2.2), wobei die Polymerfolie (2.2) bevorzugt über eine infrarotreflektierende Beschichtung (2.3) verfügt.

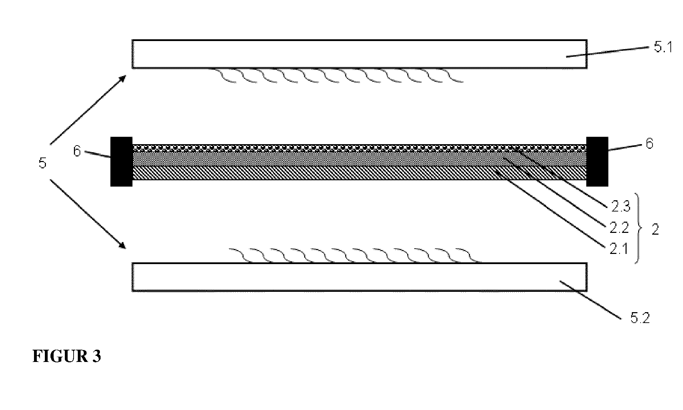

Figur 3 zeigt die Erwärmung des Bilayers (2) im Tiefziehverfahren. Der Bilayer (2) wird durch Herabsenken eines umlaufenden Rahmens (6) fixiert und vorgespannt. Die Polymerfolie (2.2) weist dabei in Richtung der oberen Heizung (5.1) und ist bevorzugt mit einer infrarotreflektierenden Beschichtung (2.3) ausgestattet. Die erste Laminierfolie zeigt in Richtung der unteren Heizung (5.2). Der Bilayer (2) wird über die Heizungen (5) erwärmt.

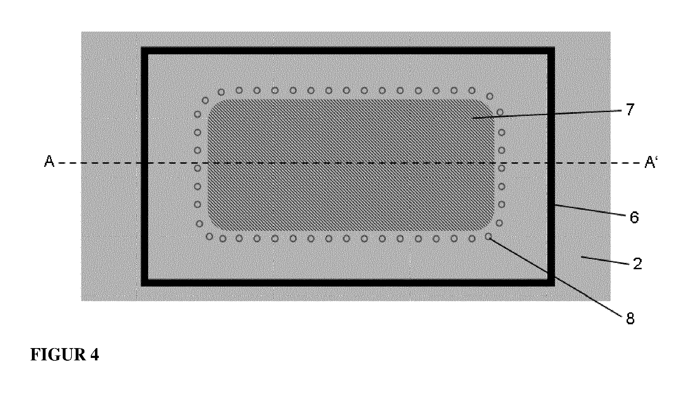

Figur 4 zeigt eine schematische Draufsicht des Bilayers (2) bei Evakuierung der Anordnung im Tiefziehverfahren. Der Bilayer (2) wird durch Absenken eines umlaufenden Rahmens (6) fixiert und vorgespannt. Das Formwerkzeug (7) wird von unten in den erwärmten Bilayer (2) gedrückt. Die Luft zwischen Bilayer (2) und Formwerkzeug (7) wird durch Anlegen eines Vakuums über Vakuumdüsen (8) entfernt. Die Vakuumdüsen (8) sind am Rand des Formwerkzeugs (7) angeordnet.

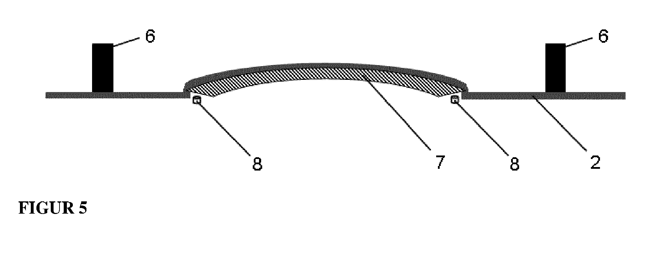

Figur 5 zeigt einen Querschnitt A-A' der Anordnung in Figur 4. Der Bilayer (2) wird durch den umlaufenden Rahmen (6) fixiert, während das Formwerkzeug (7) von unten in den erwärmten Bilayer (2) gedrückt wird. Über Vakuumdüsen (8) am Rand des Formwerkzeugs (7) wird ein Vakuum angelegt. Die Luft zwischen Formwerkzeug (7) und Bilayer (2) wird dadurch entfernt. Der Bilayer (2) spannt sich über das Formwerkzeug (7) und nimmt dabei dessen Form an.

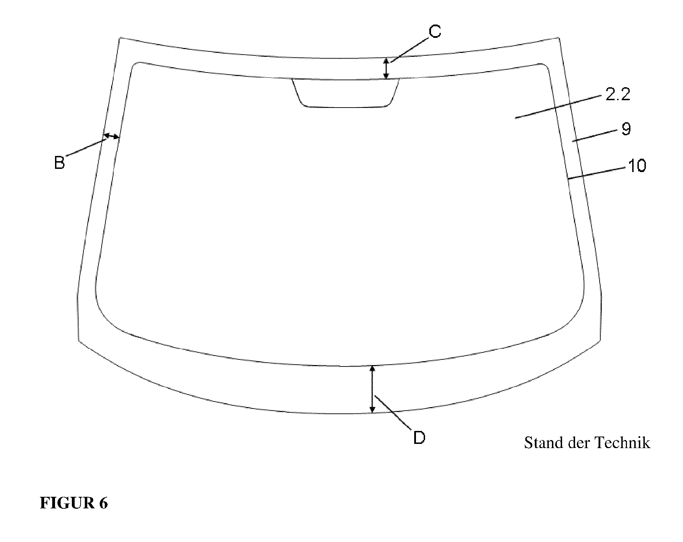

Figur 6 zeigt eine Verbundglasscheibe mit gemäß dem Stand der Technik im Randbereich stark beschnittener Polymerfolie (2.2). Nach dem Stand der Technik wird die Polymerfolie (2.2) im Folienverbund bis zum Rand des Schwarzdrucks mit Punktraster (9) abgeschnitten. Dabei ist der Rand der Polymerfolie (2.2) in der Verbundglasscheibe deutlich als Kante (10) erkennbar. Die Randbreite des A-Holms (B), die Randbreite der Dachkante (C) und die Randbreite der Motorkante (D) stellen den an der entsprechenden Scheibenkante maximal auftretenden Abstand zwischen Scheibenkante und Polymerfolie (2.2) dar.

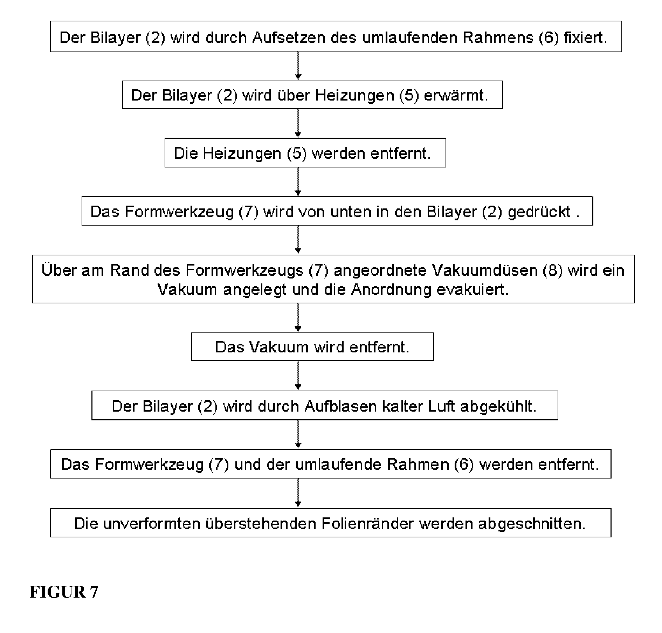

Figur 7 zeigt Fließschema des Tiefziehverfahrens zur Vorformung des Bilayers (2). Der Bilayer (2) wird durch Aufsetzen eines umlaufenden Rahmens (6) fixiert und vorgespannt. Der Bilayer (2) wird über Heizungen (5) erwärmt. Die Heizungen (5) werden entfernt. Das Formwerkzeug (7) wird von unten in den Bilayer (2) gedrückt. Diese Anordnung wird über Vakuumdüsen (8) am Rand des Formwerkzeugs (7) evakuiert. Das Vakuum wird entfernt und der Bilayer (2) durch Aufblasen kalter Luft abgekühlt. Das Formwerkzeug (7) wird abgesenkt und entfernt. Der umlaufende Rahmen (6) wird angehoben. Die unverformten überstehenden Folienränder werden abgeschnitten.

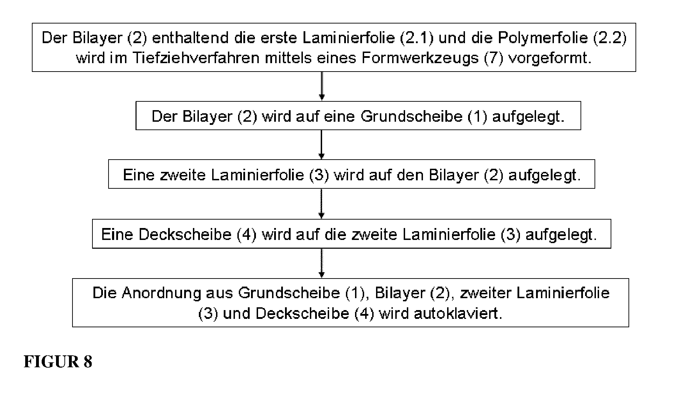

Figur 8 zeigt ein Fließschema des erfindungsgemäßen Verfahrens zur Herstellung der erfindungsgemäßen Verbundglasscheibe mit vorgeformten Polymerfilm (2.2). Der Bilayer (2), enthaltend die erste Laminierfolie (2.1) und die Polymerfolie (2.2), wird im Tiefziehverfahren mittels eines Formwerkzeugs (7) vorgeformt. Der vorgeformte Bilayer (2) wird auf eine Grundscheibe (1) aufgelegt. Auf den Bilayer (2) wird eine zweite Laminierfolie (3) und auf die zweite Laminierfolie (3) wird eine Deckscheibe (4) aufgelegt. Die Anordnung aus Grundscheibe (1), Bilayer (2), zweiter Laminierfolie (3) und Deckscheibe (4) wird autoklaviert.

Im Folgenden wird die Erfindung anhand eines Beispiels des erfindungsgemäßen Verfahrens und zweier Vergleichsbeispiele näher erläutert.

In drei Versuchsreihen wurde die Faltenbildung bei der Herstellung einer infrarotreflektierenden Verbundglasscheibe nach dem Stand der Technik (Vergleichsbeispiele 2 und 3) und nach dem erfindungsgemäßen Verfahren (Beispiel 1) verglichen. In allen Versuchsreihen wurden Deckscheiben (4) aus Floatglas mit einer Dicke von 2,1 mm und Grundscheiben (1) aus Floatglas mit einer Dicke von 1,6 mm verwendet. Eine Grundscheibe (1) und eine Deckscheibe (4) wurden gemeinsam im Schwerkraftbiegeverfahren vorgebogen. Eine erste Laminierfolie (2.1) und eine Polymerfolie (2.2) wurden als vorgefertigter Bilayer (2) eingesetzt. Die Polymerfolie (2.2) weist dabei eine infrarotreflektierende Beschichtung (2.3) auf. Die erste Laminierfolie (2.1) war eine PVB-Folie mit einer Dicke von 0,38 mm der Firma Solutia/Saflex (RK 11). Als Polymerfolie (2.2) wurde eine 50 µm dicke PET-Folie der Firma Southwall (XIR 75-G2) mit einer Silberbeschichtung eingesetzt. Eine zweite Laminierfolie (3) bestand ebenfalls aus einer PVB-Folie der Dicke 0,38 mm der Firma Solutia/Saflex (RK 11). Die zweite Laminierfolie (3) wurde vor der Verwendung nicht weiter vorbehandelt. Im erfindungsgemäßen Verfahren (Beispiel 1) wurde der Bilayer (2) mittels eines Tiefziehverfahrens vorgeformt. Nach der Herstellung einer Vorverbundscheibe nach Beispiel 1 oder den Vergleichsbeispielen 2 und 3 wurde die Scheibenanordnung unter Vakuum im Ofen schrittweise erwärmt. Dabei wurde die Scheibe erst 6 Minuten bis zu einer Temperatur von 50 °C aufgeheizt, dann 25 Minuten bei einer Temperatur von 100 °C gehalten und dann wieder über 6 Minuten auf 50 °C abgekühlt und diese Temperatur gehalten. Die entstandene Vorverbundscheibe wurde abschließend für insgesamt 2,5 Stunden bei 130 °C und bis zu 12 bar im Autoklaven behandelt. Nach einer anfänglichen Aufheizphase von 30 Minuten wurde der Druck auf 12 bar erhöht und die Scheibe 1 Stunde bei diesen Bedingungen aufbewahrt. Danach wurde die Temperatur bei gleich bleibendem Druck über einen Zeitraum von 40 Minuten auf Raumtemperatur abgesenkt. Nach weiteren 20 Minuten bei 12 bar wurde der Autoklav belüftet.

### a) Beispiel 1: Herstellung einer Verbundglasscheibe mit einer im Tiefziehverfahren vorgeformten Polymerfolie

Der Bilayer (2) wurde in die Tiefziehmaschine (Firma Illig) eingespannt und das Tiefziehverfahren erfolgte als halbkontinuierlicher Prozess. Ein Stück des Bilayers (2) wurde abgerollt und die Rolle angehalten. Daraufhin wurde ein Folienabschnitt geformt und anschließend durch Weitertransport der Folie der nächste Abschnitt eingelegt. Beim Tiefziehen des Bilayers (2) senkte sich zunächst der umlaufende Rahmen (6) auf den entsprechenden Folienabschnitt und fixierte diesen. Der eingespannte Bilayer (2) wurde daraufhin 16,5 Sekunden durch die Heizungen (5) erwärmt. Die obere Heizung (5.1) wurde bei einer Temperatur von 600 °C, die untere Heizung (5.2) bei einer Temperatur von 130 °C betrieben. Die Heizungen (5) wurden entfernt und das Formwerkzeug (7) von unten in den Bilayer (2) gedrückt. Das verwendete Formwerkzeug (7) entspricht in seiner Grundform der jeweiligen Windschutzscheibe. Die Kanten wurden jedoch in einem Radius von 2 cm abgerundet. Im nächsten Schritt wurde über die Vakuumdüsen (8) am Rand des Formwerkzeugs (7) ein Vakuum von 750 mbar 40 Sekunden lang angelegt. Dadurch wurde der Bilayer (2) über das Formwerkzeug (7) gespannt. Das Vakuum wurde entfernt und der Bilayer (2) 30 Sekunden über vier Ventilatoren oberhalb der Folienanordnung abgekühlt. Das Formwerkzeug (7) und der umlaufende Rahmen (6) wurden entfernt. Die unverformten Folienränder wurden abgeschnitten. Der Rand der Polymerfolie (2.2) wurde dabei um 6 mm mehr gekürzt als der Rand der ersten Laminierfolie (2.1) um eine Korrosion der Beschichtung zu verhindern. Der Übergang zwischen dem Scheibenbereich ohne Polymerfolie (2.2) und der restlichen Scheibenfläche wird so durch den im späteren Produktionsverlauf aufgebrachten Siebdruck verdeckt. Der Bilayer aus erster Laminierfolie (2.1) und Polymerfolie (2.2) wurde auf die ebenfalls vorgeformte Grundscheibe (1) aufgelegt. Dabei zeigte die Polymerfolie (2.2) des Bilayers (2) nach oben. Auf dem Bilayer (2) wurde eine zweite Laminierfolie (3) platziert. Der Folienstapel wurde mit einer Deckscheibe (4) abgedeckt. Die Anordnung aus Grundscheibe (1), vorgeformtem Bilayer (2), zweiter Laminierfolie (3) und Deckscheibe (4) wurde zunächst in einem Gummisack (Firma Simtech) bei einem Druck von 940 mbar, bei Raumtemperatur 5 Minuten lang vorevakuiert. Die Herstellung der Verbundglasscheibe erfolgte nach dem oben genannten bekannten Verfahren. Der Folienverbund der fertigen Verbundglasscheibe weist keinerlei Falten auf.

### b) Vergleichsbeispiel 2: Herstellung einer Verbundglasscheibe mit minimal beschnittenem Randbereich der Polymerfolie ohne Vorformen der Polymerfolie

In Vergleichsbeispiel 2 wurde eine Verbundglasscheibe hergestellt wie in Beispiel 1 mit dem Unterschied, dass die erste Laminierfolie (2.1) und die Polymerfolie (2.2) nicht vorgeformt, sondern im unbehandelten Zustand eingesetzt wurden. Der Rand der Polymerfolie (2.2) wurde dabei ebenfalls um 6 mm mehr gekürzt als der Rand der ersten Laminierfolie (2.1) um einen direkten Vergleich zum erfindungsgemäßen Verfahren zu ermöglichen.

### c) Vergleichsbeispiel 3: Herstellung einer Verbundglasscheibe mit stark beschnittenem Randbereich der Polymerfolie ohne Vorformen der Polymerfolie

In Vergleichsbeispiel 3 wurde eine Verbundglasscheibe hergestellt wie in Beispiel 1 mit dem Unterschied, dass die Polymerfolie (2.2) nicht vorgeformt wurde und der Randbereich der Polymerfolie (2.2) stark gekürzt wurde. Die Polymerfolie (2.2) wurde bis zum Rand des Schwarzdrucks mit Punktraster (9) zurückgeschnitten, so dass der Rand der Polymerfolie (2.2) als Kante (10) im sichtbaren Bereich der Verbundglasscheibe liegt.

Tabelle 1 zeigt die maximale Faltenausdehnung der Polymerfolie bei nur minimaler Beschneidung der Polymerfolie im Folienverbund der Verbundglasscheibe nach dem erfindungsgemäßen Verfahren (Beispiel 1) und nach dem Stand der Technik (Vergleichsbeispiel 2).

**Tabelle 1**

| | abgeschnittener Randbereich der Polymerfolie | maximale Faltenausdehnung an | | |
|---|---|---|---|---|
| | | A-Holm | Motorkante | Dachkante |
| Beispiel 1 | 6 mm | - | - | - |
| Vergleichsbeispiel 2 | 6mm | 85 mm | 30 mm | 50 mm |

Die in Vergleichsbeispiel 2 nach dem Stand der Technik hergestellte Verbundglasscheibe zeigt im Randbereich sehr starke Faltenbildung an allen Kanten der Scheibe. Eine maximale Ausdehnung der Falten ist an der seitlichen Kante (A-Holm) erkennbar und beträgt 85 mm. Die faltenfreie Laminierung einer Verbundglasscheibe mit Polymerfolie ist demnach unmöglich wenn nur ein kleiner Randbereich von 6 mm von der Polymerfolie abgeschnitten wird.

Die nach dem erfindungsgemäßen Verfahren hergestellte erfindungsgemäße Verbundglasscheibe mit einer tiefgezogenen Polymerfolie in Beispiel 1 weist keinerlei sichtbare Falten auf, obwohl ebenfalls nur ein kleiner Randbereich von 6 mm von der Polymerfolie abgeschnitten wurde. Dieser kleine Randstreifen genügt um die Polymerfolie und deren Beschichtung vor Umwelteinflüssen zu schützen und eine Korrosion der Beschichtung zu verhindern. Der Bereich ohne Polymerfolie ist aufgrund seiner geringen Breite ohne Weiteres durch den Siebdruck zu verdecken. Der Übergang zwischen dem Randstreifen ohne Polymerfolie und der restlichen Scheibe ist somit nicht als optisch störende Kante sichtbar.

Tabelle 2 zeigt die Randbreite des A-Holms (B), die Randbreite der Dachkante (C) und die Randbreite der Motorkante (D) für die in Vergleichsbeispiel 3 nach dem Stand der Technik hergestellte Verbundglasscheibe. Die Polymerfolie wird in den angegebenen Randbereichen abgeschnitten. Die gemessenen Randbreiten (B, C, D) entsprechen der maximalen Randbreite an der jeweiligen Scheibenkante.

**Tabelle 2**

| | abgeschnittener Randbereich der Polymerfolie an | | |
|---|---|---|---|
| | (B) | (C) | (D) |
| Vergleichsbeispiel 3 | 2,14 cm | 2,95 cm | 12,03 cm |

Bei der in Vergleichsbeispiel 3 nach dem Stand der Technik hergestellten Verbundglasscheibe wird der maximal mögliche Anteil der Polymerfolie im Randbereich abgeschnitten. Der Übergang zwischen dem Scheibenbereich ohne Polymerfolie und dem restlichen Scheibenbereich liegt dadurch am Rand des Punktrasters und ist als optisch störende Kante sichtbar. Trotz dieser umfangreichen Beschneidung der Polymerfolie ist auch in Vergleichsbeispiel 3 keine faltenfreie Laminierung einer stark gewölbten Verbundglasscheibe mit Polymerfolie im Folienverbund möglich.

Die faltenfreie Laminierung einer stark gekrümmten Verbundglasscheibe war nur nach dem erfindungsgemäßen Verfahren (Beispiel 1) möglich. Bei gleicher Größe der Polymerfolie (Vergleichsbeispiel 2) trat bei dem Verfahren nach dem Stand der Technik eine starke Faltenbildung auf. Selbst wenn die Größe der Polymerfolie stark reduziert wurde (Vergleichsbeispiel 3), war keine faltenfreie Laminierung möglich. Beim erfindungsgemäßen Verfahren kann die Polymerfolie des Weiteren so groß gewählt werden, dass der Rand der Polymerfolie nicht als optisch störende Kante im Verbundglas sichtbar ist. Außerdem kann die Zahl der Einlegefehler nach dem erfindungsgemäßen Verfahren enorm reduziert werden. Selbst wenn eine leichte Verschiebung beim Einlegen der Folien auftritt ist die Polymerfolie breit genug, so dass dieser Übergang durch den Siebdruck verdeckt ist. Eine leichte Verschiebung der Folien beeinträchtigt somit nicht die Qualität des Endproduktes. Das erfindungsgemäße Verfahren ist auch unter wirtschaftlichen Gesichtspunkten vorteilhaft, da Produktfehler wie Faltenbildung und Einlegefehler vermieden werden und das Verfahren auch für große Stückzahlen geeignet ist.

### Bezugszeichenliste

- 1: Grundscheibe
- 2: Bilayer
- 2.1: erste Laminierfolie
- 2.2: Polymerfolie
- 2.3: infrarotreflektierende Beschichtung
- 3: zweite Laminierfolie
- 4: Deckscheibe
- 5: Heizungen
- 5.1: obere Heizung
- 5.2: untere Heizung
- 6: umlaufender Rahmen
- 7: Formwerkzeug
- 8: Vakuumdüsen
- 9: Schwarzdruck mit Punktraster
- 10: Kante
- A-A': Schnittlinie
- B: Randbreite A-Holm
- C: Randbreite Dachkante
- D: Randbreite Motorkante

## Patentansprüche

1. Verfahren zur Herstellung einer gewölbten Verbundglasscheibe, wobei
a) eine erste Laminierfolie (2.1) und/oder eine Polymerfolie (2.2) mittels eines Formwerkzeugs (7) tiefgezogen werden,
b) auf eine Grundscheibe (1) die erste Laminierfolie (2.1) und die Polymerfolie (2.2), auf die Polymerfolie (2.2) eine zweite Laminierfolie (3), auf die zweite Laminierfolie (3) eine Deckscheibe (4) angeordnet werden und
c) die Anordnung autoklaviert wird.

2. Verfahren nach Anspruch 1, wobei das im Tiefziehverfahren verwendete Formwerkzeug (7) in seiner Grundform der Form der Deckscheibe (4) und der Grundscheibe (1) entspricht.

3. Verfahren nach Anspruch 1 oder 2, wobei die Kanten des Formwerkzeugs (7) mit einem Radius von 0,5 cm bis 3 cm, bevorzugt 2 cm abgerundet werden.

4. Verfahren nach einem der Ansprüche 1 bis 3, wobei ein Bilayer (2) aus der ersten Laminierfolie (2.1) und der Polymerfolie (2.2) tiefgezogen wird.

5. Verfahren nach einem der Ansprüche 1 bis 4, wobei die erste Laminierfolie (2.1) und die Polymerfolie (2.2) tiefgezogen werden, indem
a) die erste Laminierfolie (2.1) und die Polymerfolie (2.2) mit der ersten Laminierfolie (2.1) nach unten zeigend durch Aufsetzen eines umlaufenden Rahmens (6) fixiert werden,
b) die erste Laminierfolie (2.1) und die Polymerfolie (2.2) über eine obere Heizung (5.1) und eine untere Heizung (5.2) erwärmt werden und die Heizungen (5.1, 5.2) entfernt werden,
c) das Formwerkzeug (7) von unten in die erste Laminierfolie (2.1) und die Polymerfolie (2.2) gedrückt wird,
d) über am Rand des Formwerkzeugs (7) angeordnete Vakuumdüsen (8) ein Vakuum angelegt und wieder entfernt wird,
e) die erste Laminierfolie (2.1) und die Polymerfolie (2.2) durch Aufblasen kalter Luft abgekühlt werden,
f) das Formwerkzeug (7) und der umlaufende Rahmen (6) entfernt werden und
g) die unverformten überstehenden Folienränder abgeschnitten werden.

6. Verfahren nach Anspruch 5, wobei die Heizungen (5) bei einer Temperatur von 70 °C bis 150 °C, bevorzugt 90 °C bis 130 °C, eingesetzt werden.

7. Verfahren nach einem der Ansprüche 1 bis 5, wobei die Polymerfolie (2.2) mit einer infrarotreflektierenden Beschichtung (2.3), bevorzugt enthaltend Silber, Titandioxid, Aluminiumnitrid, Zinkoxid und/oder Gemische davon und die erste Laminierfolie (2.1) tiefgezogen werden.

8. Verfahren nach Anspruch 7, wobei die obere Heizung (5.1) bei einer Temperatur von 500 °C bis 700 °C, bevorzugt 550 bis 650 °C, und die untere Heizung (5.2) bei einer Temperatur von 70 °C bis 150 °C, bevorzugt 90 °C bis 130 °C eingestellt wird.

9. Verfahren nach einem der Ansprüche 1 bis 8, wobei die erste Laminierfolie (2.1) und die zweite Laminierfolie (3) mit Polyvinylbutyral, Ethylenvinylacetat, Polyurethan und/oder Gemischen und/oder Copolymeren davon eingesetzt werden.

10. Verfahren nach einem der Ansprüche 1 bis 9, wobei die erste Laminierfolie (2.1) und die zweite Laminierfolie (3) mit einer Dicke von 0,1 mm bis 0,8 mm, bevorzugt von 0,3 mm bis 0,6 mm, eingesetzt werden.

11. Verfahren nach einem der Ansprüche 1 bis 10, wobei die Polymerfolie (2.2) mit Polyethylenterephthalat, Polyethylen, Polypropylen, Polycarbonat, Polybutylenterephthalat, Polyethylennaphthalat und/oder Gemischen und/oder Copolymeren davon und einer Dicke von 20 µm bis 100 µm, bevorzugt 40 µm bis 60 µm eingesetzt wird.

12. Verwendung einer nach einem der Ansprüche 1 bis 11 hergestellten Verbundglasscheibe als Fahrzeugscheibe, Schiffsscheibe oder Flugzeugscheibe, als Bauverglasung oder Architekturverglasung.

13. Verwendung einer tiefgezogenen Polymerfolie (2.2) und/oder Laminierfolie (2.1) nach einem der Ansprüche 1 bis 12 in einer Verbundglasscheibe.

14. Verbundglasscheibe erhältlich nach einem Verfahren nach einem der Ansprüche 1 bis 13, mindestens umfassend von unten nach oben als Verbundglasscheibe laminiert:
a) eine Grundscheibe (1),
b) auf der Grundscheibe (1) eine erste Laminierfolie (2.1),
c) auf der ersten Laminierfolie (2.1) eine tiefgezogene Polymerfolie (2.2),
d) auf der tiefgezogenen Polymerfolie (2.2) eine zweite Laminierfolie (3) und
e) auf der zweiten Laminierfolie (3) eine Deckscheibe (4)

15. Verbundglasscheibe nach Anspruch 14, wobei die erste Laminierfolie (2.1) tiefgezogen ist.
